# EUROPÄISCHE PATENTANMELDUNG

(11) **EP 0 851 166 A1**
(43) Veröffentlichungstag der Anmeldung: **01.07.1998**
(21) Anmeldenummer: 97203878.0
(22) Anmeldetag: 10.12.1997
(51) Int. Cl.: F16L 55/033, F16L 3/12

(54) **Vorrichtung zur schwingungs-dämpfenden Befestigung einer Rohrleitung an einer tragenden Wand**

(30) Priorität: 31.12.1996 NL 1004919
(71) Anmelder: J. van Walraven B.V., NL-3641 RK Mijdrecht (NL)
(72) Erfinder: van Walraven, Jan, 3641 GP Mijndrecht (NL)
(74) Vertreter: Boelsma, Gerben Harm, Ir.

(57) **Zusammenfassung**

Schwingungsdämpfende Befestigung einer Rohrleitung (5) an einer tragenden Wand, bestehend aus einer an der Wand zu befestigenden Tragstütze (1) mit zwei von dieser ausragenden, in einem dämpfenden Körper aus Gummi oder derartigem Material verankerten Gewindeelementen (3), wobei auf jedem Gewindeelement (3) eine die Rohrleitung umspannende Rohrschelle (4) geschraubt sitzt.

Erfindungsgemäss ist neben und an jeder der beiden mit der Tragstütze (1) verbundenen Rohrschellen (4) anliegend, eine ähnliche, von der Tragstütze freiliegende Rohrschelle (4') auf der Rohrleitung festgespannt.

## Beschreibung

Die Erfindung bezieht sich auf eine Vorrichtung zur schwingungsdämpenden Befestigung einer Rohrleitung an einer tragenden Wand, bestehend aus einer an der Wand zu befestigenden Tragstütze mit zwei von dieser ausragenden, in einem dämpfenden Körper aus Gummi oder derartigem Material verankerten Gewindeelementen, wobei auf jedem Gewindeelement eine die Rohrleitung umspannende Rohrschelle geschraubt sitzt.

Derartige Vorrichtungen sind bekannt und werden angewandt an Stellen, wo die zu befestigende Rohrleitung nicht unter Einfluss von z.B. Wärmedehnungen verschieben darf.

Bei den bekannten schwingungsdämpfenden Tragstützen sind die beiden ausragenden Gewindeelemente, die in der Praxis durch Stiftschrauben gebildet werden, im Stande verhältnismässig grosse Längskräfte aufzunehmen. In der Praxis hat sich herausgestellt, dass das Vermögen zum Aufnehmen von Längskräften oft die sämtlichen Spannkräfte der auf den Stiftschrauben geschraubten Rohrschellen übersteigt. In der Praxis kommt es öfters vor, dass Längsverschiebungen der Rohrleitung relativ zu den Rohrschellen auftreten, auch wenn die letzteren mit ihren Flanschen maximal zusammengeklemmt sind. Dabei muss berücksichtigt werden, dass die Abmessungen der Rohrleitung und der Rohrschellen normalisiert sind.

Die Erfindung beabsichtigt nunmehr die Spannkraft und damit der Widerstand der Rohrstellen gegen unerwünschte Verschiebungen der Rohrleitung etwa auf das Vermögen der ausragenden Stiftschrauben zum Aufnehmen von Längskräften abzustimmen, ohne dazu eine geänderte Dimensionierung der Rohrschellen zu verwenden.

Erfindungsgemäss wird dieser Zweck in einfachster und effektiver Weise dadurch erzielt, dass neben und an jeder der beiden mit der Tragstütze verbundenen Rohrschellen anliegend eine ähnliche, von der Tragstütze freiliegende Rohrschelle auf der Rohrleitung festgespannt sitzt.

Die zusätzlichen Rohrschellen vergrössern dabei die umspannte Rohroberfläche und damit den Widerstand gegen Verschiebungen der Rohrleitung.

Vorzugsweise sind die beiden zusätzlichen Rohrschellen symmetrisch in bezug auf die beiden anderen Schellen angeordnet. Der Widerstand gegen unerwünschte Verschiebungen wird damit in jeder Richtung um mindestens 50% erhöht.

Zu bemerken ist, dass aus der europäischen Patentanmeldung EP 0 693 649 ein Verfahren zum schwingungsdämpfenden Befestigen einer Rohrleitung an einer tragenden Wand bekannt ist, wobei die Leitung an einer Stelle, wo keine Längsverschiebungen erwünscht sind, verschieblich durch eine mit einer schwingungsdämpfenden Einlage versehene und an der tragenden Wand befestigte Rohrschelle geführt wird und wobei die Unverschieblichkeit an dieser Stelle dadurch erzielt wird, dass an beiden Seiten gegen die die Rohrleitung verschieblich umfassende Rohrschelle eine ähnliche Rohrschelle auf der Rohrleitung festgespannt wird. In diesem Fall wird keine schwingungsdämpfende Tragstütze verwendet und ist man zur Realisierung der schwingungsdämpfenden Befestigung vollständig von der schwingungsdämpfenden Wirkung der Einlage abhängig.

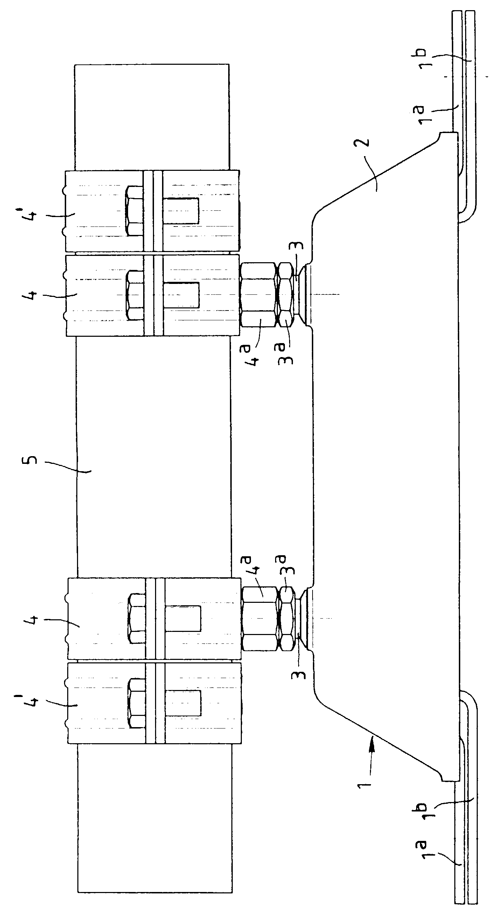

Die Erfindung wird unten an Hand der Zeichnung mit einem Ausführungsbeispiel näher erläutert.

In der Zeichnung ist mit 1 eine Tragstütze bekannter Art bezeichnet. Diese Tragstütze besteht etwa aus einem System mit zwei mit nach aussen umgebogenen Befestigungsflanschen 1a, 1b aufeinanderliegenden Bügeln, die von einer Haube 2 abgedeckt sind. Die beiden U-förmigen Bügel haben eine unterschiedliche Höhe und Breite, wodurch zwischen den aufstehenden Flanschen und den Stegen der beiden Bügel ein Raum vorhanden ist, der mit Gummi oder derartigem schwigungsdämpfendem Material ausgefüllt ist. In der Gummi-Ausfüllung ist ein dritter Bügel eingebettet, der keine Flansche hat, aber auf dem Steg desselben sind zwei Stiftschrauben 3 befestigt, die durch weite Löcher im Steg des Bügels mit der grösseren Höhe und durch Löcher in der Haube 2 hindurch nach aussen ragen.

Auf jeder der Stiftschrauben 3 sitzt in bekannter Weise eine Rohrschelle 4, welche Rohrschelle dazu mit einer angeschweissten Mutter 4a versehen ist. Mittels einer Gegenmutter 3a wird die Befestigung jeder Rohrschelle 4 auf der betreffenden Stiftschraube 3 gesichert. Die Rohrschellen 4 aus Metall sind in bekannter Weise, d.h. ohne Einlage, auf der zu befestigenden Rohrleitung 5 festgespannt. Zum Vergrössern des Widerstandes gegen Verschiebungen der Rohrleitung 5, z.B. durch Wärmedehnungen, ist neben und an jeder Rohrschelle 4 anliegend eine zusätzliche Rohrschelle 4' auf der Rohrleitung 5 festgeklemmt. Diese Rohrschellen 4' sind der gleichen Art wie die Rohrschellen 4, liegen aber frei von der Tragstütze 1, im Zusammenhang womit die Muttern weggelassen sind. Der Abstand zwischen den Stiftschrauben 3 und damit zwischen den beiden Rohrschellen 4 soll verhältnismässig klein gehalten werden, damit die infolge der Temperaturschwankungen auftretenden Länge-Änderungen des zwischen den Rohrschellen liegenden Leitungsabschnitts zu vernachlässigen sind.

Im gezeichneten Ausführungsbeispiel liegen die zusätzlichen Rohrschellen 4' an den voneinander abgewendeten Stirnrändern der Rohrschellen 4 an. Dies bedeutet, dass in jeder Längsrichtung die umspannte Oberfläche, womit Verschiebungen entgegengetreten werden, um 50% vergrössert worden ist. Gegebenenfalls könnte ein zweites Paar von zusätzlichen Schellen 4' im Raum zwischen den beiden Schellen 4 angeordnet werden, in welchem Fall die Verschiebungen entgegentretende Spannfläche um 100% vergrössert werden würde.

An weiteren, längs der Rohrleitung verteilt liegenden Stellen wird die Rohrleitung durch die an jenen Stellen angeordneten Rohrschellen verschieblich geführt. Zur Realisierung des fur die Verschieblichkeit an jenen Stellen erforderlichen Spielraums können in bekannter Weise an diesen Stellen Füllringe zwischen den Flanschen der Rohrschellen angebracht werden.

Die beschriebene Vorrichtung kann mittels der Flansche 1a, 1b der Tragstütze 1 gegen waagerechte oder senkrechte Wände befestigt werden. Die Rohrleitung 5 kann sich dabei in einer etwa waagerechter Richtung oder in einer etwa senkrechten Richtung erstrecken.

## Patentansprüche

1. Vorrichtung zur schwingungsdämpenden Befestigung einer Rohrleitung an einer tragenden Wand, bestehend aus einer an der Wand zu befestigenden Tragstütze mit zwei von dieser ausragenden, in einem dämpfenden Körper aus Gummi oder derartigem Material verankerten Gewindeelementen, wobei auf jedem Gewindeelement eine die Rohrleitung umspannende Rohrschelle geschraubt sitzt, dadurch gekennzeichnet, dass neben und an jeder der beiden mit der Tragstütze verbundenen Rohrschellen anliegend, eine ähnliche, von der Tragstütze freiliegende Rohrschelle auf der Rohrleitung festgespannt sitzt.

2. Vorrichtung nach Anspruch 1, dadurch gekennzeichnet, dass die zusätzlichen Rohrschellen symmetrisch in bezug auf die mit der Tragstütze in Verbindung stehenden Rohrschellen angeordnet sind.
